# EUROPÄISCHE PATENTSCHRIFT

(11) **EP 1 338 825 B1**
(45) Veröffentlichungstag und Bekanntmachung des Hinweises auf die Patenterteilung: **17.08.2005**
(21) Anmeldenummer: 02003477.3
(22) Anmeldetag: 14.02.2002
(51) Int. Cl.: F16G 3/04

(54) **Verbindung von als Drahthaken ausgebildeten Gurtverbindern mit einem Gurt sowie Verfahren**
Fastening of belt coupling wire hooks to a belt and method
Jonction d'agrafes de courroie à crampons à une courroie et procédé

(43) Veröffentlichungstag der Anmeldung: 27.08.2003
(73) Patentinhaber: MATO Maschinen- und Metallwarenfabrik Curt Matthaei GmbH & Co KG, 63071 Offenbach (DE)
(72) Erfinder: Herold, Wolfgang, 63075 Offenbach/Main (DE)
(74) Vertreter: Quermann, Helmut, Dipl.-Ing.

(56) Entgegenhaltungen:
- DE-A- 3 642 803
- DE-A- 19 820 204
- DE-A- 19 820 205
- DE-B- 1 008 540
- DE-C- 732 524
- DE-U- 29 808 348
- FR-A- 779 942
- GB-A- 210 116
- PATENT ABSTRACTS OF JAPAN vol. 1999, no. 03, 31. März 1999 (1999-03-31) & JP 10 338377 A (NITTA IND CORP), 22. Dezember 1998 (1998-12-22)

## Beschreibung

Die Erfindung betrifft eine Verbindung von als Drahthaken ausgebildeten Gurtverbindern mit einem Ende eines Gurtes, wobei der jeweilige Drahthaken beidseitig des Gurtes angeordnete Schenkel und sich an diese anschließende, in den Gurt eingepresste Hakenenden, sowie eine, die beiden Schenkel verbindende Kupplungsöse aufweist; ferner mit einem flächigen Abdeckelement für die Hakenanordnung, wobei das Abdeckelement sich über die Breite des Gurtes erstreckt.

Die Erfindung betrifft ferner ein Verfahren zum Verbinden von Drahthaken und einem flächigen Abdeckelement für die Drahthaken mit einem Ende eines Gurtes.

Eine solche Verbindung ist aus der DE 198 20 204 A1 bekannt. Mit den beiden Gurtenden sind die im Wesentlichen U-förmigen Drahthaken verpresst, die im Bereich ihrer Kupplungsösen in kämmende Anordnung gebracht werden, wobei im Überlappungsbereich der Kupplungsösen diese ein Kupplungsstab durchsetzt, so dass eine sichere Verbindung der beiden Gurtenden hergestellt ist.

Abdeckungen finden bei solchen Verbindungen Verwendung, um entweder die metallischen Drahthaken vor Verschleiß durch mittels der Gurte transportiertes Gut zu schützen oder zu gewährleisten, dass das transportierte Gut durch die Drahthaken nicht beschädigt wird. So besteht insbesondere dann, wenn der Gurt in Art einer Mulde bewegt wird und / oder eine Vielzahl von Umlenkrollen passieren muss, die Gefahr, dass der eine oder andere Drahthaken bricht bzw., bei einer Verbindung unter Verwendung eines Querdrahtes zum positionieren der Drahthaken zueinander, dieser bricht und herausgebrochene Enden der Drahthaken über die Transportebene des Gurtes hinausstehen.

Die DE 198 20 204 A1 ist ein Abdeckelement vorgeschlagen, das sich über die miteinander verbundenen Endbereiche der Gurtenden erstreckt. Das Abdeckelement ist nur im Bereich der ziehenden Drahthaken auf einer Seite des Gurtes, zwischen dem Gurtende und den Drahthaken, festgelegt und erstreckt sich in den Bereich des anderen Gurtendes, wobei es außerhalb der diesem Gurtende zugeordneten Drahthaken positioniert ist und lose auf deren Oberseite aufliegt.

Eine ähnlich gestaltete gelenkige mechanische Verbindung ist aus der DE 198 20 205 A1 bekannt.

In der DE-PS 732 524 ist eine Verbindung für Treibriemen oder Förderbänder beschrieben, bei der der Riemen aus einem Gewebekern und Gummideckschichten besteht. Vor dem Anbringen der Drahthaken wird die Gummideckschicht im Bereich des Riemenendes entfernt und anschließend auf die Drahthaken eine Haftschicht aufgebracht. Nach dem Anbringen der Drahthaken wird der Gewebekern aufvulkanisiert, so dass sich eine feste Verbindung zwischen den Drahthaken und der Gummideckschicht ergibt. Auf diese Art und Weise ist sichergestellt, dass der Riemen auch im nassen Betrieb laufen kann.

Aus der DE 36 42 803 C2 ist bekannt, Drahthaken, die nicht mittels eines Querdrahtes gefasst sind, in einem Papier zu positionieren, wobei die Drahthaken Schlitze im Papier durchsetzen. Die Drahthaken werden zusammen mit dem Papier und dem Gurtende verpresst und anschließend das Papier abgezogen.

Aus der DE 36 42 803 A1 ist es bekannt, bei einer Presseinrichtung zum Verpressen von Riemenhaken mit einem Riemen, die Pressbacken der Presseinrichtung mit einer elektrischen Heizvorrichtung zu versehen. Hierdurch können zumindest die Schenkel der Riemenhaken vor dem Biegen erwärmt und, unter teilweiser Plastifizierung des Kunststoffes des Flachgewebes des Riemens, an dessen beide Seiten beim Zubiegen so zusammengepresst werden, dass im fertig gepressten Zustand der Außenabstand der Schenkel an keiner Stelle größer als die Dicke des Flachgewebes ist.

Aus der Praxis sind Wäschereimaschinen bekannt, die mit einer Vielzahl parallel nebeneinander angeordneter Fördergurte versehen sind, die dem Fördern von Wäschestücken dienen. Die Wäschestücke, bei denen es sich beispielsweise um Handtücher aus Frottee handelt, werden so einer Bügelstation und anschließend einer Faltstation zugeführt.

Bei solchen Wäschereimaschinen sind die Gurte in aller Regel in der Länge elastisch; die Gurte sind beispielsweise Baumwollgurte mit elastischen Fasern. Damit die Gurtenden nicht ausfransen, sind sie mit einem Abdeckelement versehen, das die Stirnseite des jeweiligen Gurtes und die beiden sich hieran anschließenden Gurtober- und -unterflächen abdeckt. Das Abdeckelement ist ein Gewebeklebeband, das im Bereich seiner Enden, somit quer zur Längserstreckung des Gurtes, mit diesen vernäht ist. An dem so präparierten Gurtende werden die Drahthaken befestigt. - Bei einem derart mit Drahthaken ausgestatteten Gurtende, sind die eingangs genannten Nachteile zu verzeichnen, nämlich die beim Bruch der Drahthaken bzw. eines diese fassenden Querdrahtes vorstehenden Metallteile, die dazu führen, dass, bei mittels des Gurtes bzw. der Gurte transportierten Wäschestücken, Fäden gezogen werden und die Wäschestücke damit zumindest unansehnlich werden.

Es ist Aufgabe der vorliegenden Erfindung, eine Verbindung von als Drahthaken ausgebildeten Gurtverbindern mit einem Ende eines Gurtes anzugeben, die gewährleistet, dass die Drahthaken nicht nachteilig auf das zu fördernde Gut einwirken können und andererseits auch sichergestellt ist, dass das zu fördernde Gut nicht negativ, im Sinne einer Beschädigung, auf die Drahthaken einwirken kann. Es ist schließlich Aufgabe der vorliegenden Erfindung, ein Verfahren anzugeben, das es ermöglicht, auf besonders einfache Art und Weise, sowohl die Drahthaken als auch eine dieser zugeordneten Abdeckung an einem Gurtende anzubringen.

Bezogen auf die Verbindung der Drahthaken mit einem Ende des Gurtes, gemäß den Merkmalen der eingangs genannten Art, schlägt die Erfindung vor, dass das Abdeckelement, ausgehend von der Stirnseite des Gurtes, beidseitig des Gurtes angeordnet ist und die Schenkel der Drahthaken abdeckt.

Wesentlich ist bei der Erfindung somit, dass nicht die Schenkel der Drahthaken das Abdeckelement abdecken, sondern statt dessen das Abdeckelement die Schenkel der Drahthaken abdeckt. Das zu fördernde Gut kommt somit nicht mit den Schenkeln der Drahthaken in Verbindung, sondern ausschließlich mit dem Abdeckelement. Dieses erstreckt sich allerdings nicht nur im Bereich derjenigen Schenkel der Drahthaken, die dem zu fördernden Gut zugewandt sind, sondern auch im Bereich derjenigen Schenkel der Drahthaken, die der Förderseite des Gurtes abgewandt sind. Das Abdeckelement erstreckt sich schließlich auch über die Stirnseite des Gurtes. Es lässt den Bereich der Kupplungsösen der Drahthaken frei. In diesem Bereich durchsetzt der Kupplungsstab die miteinander kämmenden Kupplungsösen der mit den Gurtenden verbundenen Drahthaken.

Aufgrund der erfindungsgemäßen Anordnung des Abdeckelementes hat ein Bruch des einen oder anderen Drahthakens bzw. eines Querdrahtes zum Verbinden der Drahthaken, der dem Gurtende zugeordnet ist, keine nachteiligen Folgen auf die Qualität des von dem Gurt bzw. den Gurten transportierten Gutes. Metallenden der gebrochenen Teile dringen nicht durch die Abdeckung hindurch, so dass das Gut, beispielsweise Frotteehandtücher, ausschließlich das Abdeckelement kontaktieren, abgesehen von dem in Förderrichtung recht schmalen Kupplungsbereich der beiden Gurtenden.

Die erfindungsgemäße Gestaltung der Verbindung ist besonders geeignet für textile Gurte, insbesondere Baumwollgurte. Durch die Positionierung des Abdeckelementes im Bereich der Stirnseite des Gurtes wird sichergestellt, dass das Gurtende im Betrieb des Gurtes nicht ausfranst. Das sich in Art eines U über die Schenkel der Drahthaken und die Stirnseite des Gurtes erstreckende Abdeckelement gibt der Verbindung der Drahthaken einen zusätzlichen Halt, da das Abdeckelement, der Drahthaken und der Gurt eine Einheit darstellen.

Gemäß einer besonderen Ausführungsform der Erfindung ist vorgesehen, dass die Verbindung des flächigen Abdeckelementes durch Kleben erfolgt. Es ist insbesondere daran gedacht, dass das Abdeckelement mit einer Klebeschicht, vorzugsweise einer Heißklebeschicht, oder einem elastischen Kleber versehen ist. Beim Anbringen des Abdeckelementes kontaktiert dieses die Stirnseite des Gurtes und die vom Gurt weggerichteten Flächen der Schenkel der Drahthaken und gegebenenfalls, wenn das Abdeckelement entsprechend lang ist, auch den sich an die Drahthaken anschließenden Bereich des Gurtes. Zusätzlich kann das Abdeckelement im Bereich seiner, senkrecht zur Förderrichtung des Gurtes angeordneten Stirnkanten, mit dem Gurt vernäht sein. Dies erhöht die Sicherheit gegen unerwünschtes Lösen des Abdeckelementes vom Gurt.

Das Abdeckelement ist vorzugsweise als Gewebeband ausgebildet. Grundsätzlich ist es denkbar, das Abdeckelement als Kunststoff-Formteil zu gestalten. Dieses kann mittels eines Heißklebers an den Drahthaken und gegebenenfalls dem Gurt angebracht werden, oder aber auch ohne Kleber, wenn das Abdeckelement als Formteil aus einem thermoplastischen Kunststoff gebildet ist.

Die Verbindung zwischen Abdeckelement und Drahthaken lässt sich weiter verbessern, wenn das Abdeckelement im Bereich der Hakenenden der Drahthaken zwischen die Schenkel der Drahthaken und den Gurt zurückgebogen ist. Diese Endbereiche des Abdeckelementes werden somit beim Anbringen der Drahthaken am Gurtende mit eingepresst, und es durchdringen hierbei die Haken diese Bereiche des Abdeckelementes.

Die Festigkeit der Verbindung zwischen den Drahthaken und dem Abdeckelement kann weiter gesteigert werden, wenn die mit dem Gurtende verbundenen Drahthaken mit ihren Hakenenden in das Abdeckelement eingreifen. Die Drahthaken durchsetzen damit den Gurt und treten mit den Hakenenden aus dem Gurt heraus in das Abdeckelement.

Bei Drahthaken, die mittels eines Querdrahtes gefasst sind, insbesondere im Bereich des Übergangs von der Kupplungsöse zu einem der Schenkel des Drahthakens, wird es als vorteilhaft angesehen, wenn das Abdeckelement den Querdraht auf seiner, den Kupplungsösen zugewandten Seite kontaktiert. Bei einem Bruch des Querdrahtes, beispielsweise durch Führung des Gurtes in Art einer Mulde und/oder über eine Vielzahl von Umlenkrollen, deckt das Abdeckelement den Querdraht zuverlässig ab, so dass abgebrochene Enden des Querdrahtes nicht in den Bereich des vom Gurt bzw. von den Gurten zu transportierenden Gutes gelangen können.

Gemäß einer besonders vorteilhaften Gestaltung ist vorgesehen, dass das Abdeckelement mit parallelen Schlitzen versehen ist, die die Hakenanordnung im Bereich der Kupplungsösen durchsetzt. Diese Gestaltung des Abdeckelementes ermöglicht es, auf einfache Art und Weise, die Abdeckung der Verbindung nur im Bereich der Schenkel der Drahthaken und der Stirnfläche des Gurtes herbeizuführen. Die Kupplungsösen sind hingegen durch das Abdeckelement nicht tangiert.

Bei einem Verfahren zum Herstellen einer Verbindung nach einem der Ansprüche 1 bis 10 wird erfindungsgemäß vorgeschlagen, dass das Befestigen der Drahthaken am Gurtende und das Anbringen des Abdeckelementes in einem Arbeitsgang erfolgt. Bei diesem Arbeitsgang handelt es sich vorzugsweise um das Einpressen der Drahthaken in den Gurt.

Es ist insbesondere vorgesehen, dass das Abdeckelement mit Schlitzen versehen ist, durch die die Kupplungsösen, vor dem Befestigen der Drahthaken am Gurtende, hindurchgesteckt werden. Das Abdeckelement lässt sich somit, vor dem Befestigen der Drahthaken am Gurtende, in der Hakenanordnung vorpositionieren, indem die Drahthaken in die Schlitze des Abdeckelementes eingesteckt werden, derart, dass die Kupplungsösen auf der einen Seite, die Schenkel auf der anderen Seite des Abdeckelementes positioniert sind. Insbesondere bei einer solchen Gestaltung des Abdeckelementes und einer solchen Anordnung des Abdeckelementes relativ zur Hakenanordnung, kann auf besonders einfache Art und Weise, das Befestigen der Drahthaken am Gurtende und das Aufbringen des Abdeckelementes in einer Presse erfolgen. Hierbei nehmen aufeinander zu bewegbare Pressbacken die in geöffneter Position befindlichen Haken und das zwischen diese eingelegte Gurtende, sowie Endabschnitte des Abdeckelementes, die zwischen den Schenkeln der Haken und den Backen angeordnet sind, zwischen sich auf.

Gemäß einer besonders vorteilhaften Weiterbildung der Erfindung ist vorgesehen, dass das Abdeckelement beim Aufbringen auf die Schenkel der Haken verklebt wird, insbesondere unter Hitzeeinwirkung verklebt wird. Dies kann auf einfache Art und Weise dadurch geschehen, dass die mit dem Abdeckelement in Kontakt gelangenden Pressbacken aufgeheizt sind. Statt des Erhitzens durch Kontakt mit heißen Pressbalken kann die Erhitzung des Abdeckelementes auch durch Heißluft vonstatten gehen. Es ist ferner denkbar, das Abdeckelement an einem Ort zu erhitzen und dann zeitnah der Pressstation zuzuführen. Der Vorteil ist darin zu sehen, dass ein Verkleben des Abdeckelementes mit dem Pressbalken oder dergleichen ausscheidet.

Um eine dauerhafte Verbindung des Abdeckelementes herzustellen, soll dieses nicht nur mit den Drahthaken im Bereich deren Schenkeln, sondern auch mit der Stirnfläche des Gurtendes und/oder den, den Kupplungsösen abgewandten Bereichen des Gurtes verbunden sein. Als bevorzugte Verbindungsart wird eine Klebverbindung, insbesondere eine Klebverbindung unter Hitzeeinwirkung, angesehen.

Die Erfindung schlägt somit ein besonders gestaltetes bzw. besonders angeordnetes Abdeckelement vor, das nicht nur wesentliche Bereiche der Drahthaken schützt bzw. zu transportierendes Gut gegen die Einwirkung schadhafter Drahthaken schützt, sondern auch dazu beiträgt, dass Zugkräfte vom Abdeckelement mit übertragen werden können. Dies ist dann der Fall, wenn Kräfte vom Abdeckelement in einen die Drahthaken verbindenden Querdraht eingeleitet werden. Insbesondere bei textilem Gurtgewebe stellt das Abdeckelement einen Ausfransschutz für das Gewebe dar. Dadurch, dass das Abdeckelement die Drahthaken außen umgibt, ist die dem zu transportierenden Gut zugewandte Kontaktfläche im Gurtendenbereich weitgehend eben und trägt dazu bei, den Gurt gerade und flach zu halten, wirkt somit einer Verdrehung durch eine unsymmetrische Krafteinleitung innerhalb des Gurtes entgegen.

Bevorzugte Merkmale der Erfindung sind in den Unteransprüchen, der Beschreibung der Figuren und den Figuren selbst dargestellt.

In den Figuren ist die Erfindung anhand zweier Ausführungsbeispiele dargestellt, ohne hierauf beschränkt zu sein. Es stellt dar:
- Figur 1: eine Seitenansicht einer in ein Abdeckelement eingesetzten, mittels eines Querdrahtes gefassten Anordnung von Drahthaken,
- Figur 2: eine Draufsicht der in Figur 1 gezeigten Bauteile,
- Figur 3: in einer Seitenansicht die in eine Pressvorrichtung eingesetzte Anordnung von Drahthaken und Abdeckelement mit zwischen die noch geöffneten Drahthaken eingesetztem Gurtende,
- Figur 4: den mit den Drahthaken und dem Abdeckelement versehenen Gurt, nach dem Verbinden der Teile mit dem Gurt, in einer Seitenansicht,
- Figur 5: die Anordnung gemäß Figur 4 in einer Draufsicht,
- Figur 6: eine Anordnung gemäß Figur 3, allerdings modifiziert bezüglich des Abdeckelementes, das in den Bereich zwischen den Drahthaken und dem Gurt zurückgeschlagen ist und
- Figur 7: die Anordnung gemäß Figur 6, nach dem Verbinden der Drahthaken mit dem Gurtende, veranschaulicht in einer Seitenansicht.

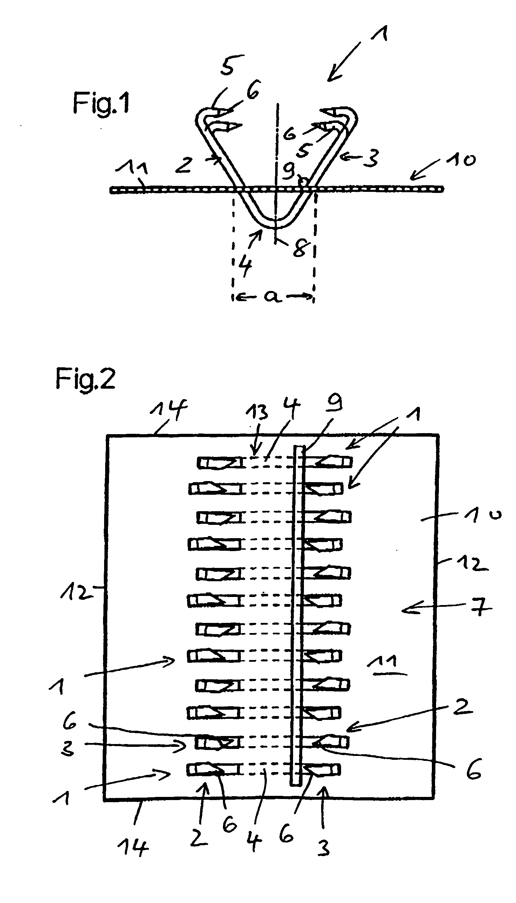

Jeder Drahthaken 1 weist einen langen Schenkel 2 und einen kurzen Schenkel 3 auf, sowie eine Kupplungsöse 4, die die beiden Schenkel 2 und 3 miteinander verbindet. Das freie Ende des jeweiligen Schenkels 2 bzw. 3 ist als, bezogen auf den jeweils anderen Schenkel, auf diesen zu gerichteter Hakenabschnitt 5 mit Spitze 6 ausgebildet. Mehrere Drahthaken 1, im Ausführungsbeispiel zwölf Drahthaken 1, bilden eine Hakenanordnung 7, wobei der jeweils nächstfolgende Drahthaken 1, bezogen auf die in Figur 1 gezeigte Achse 8, um 180° gedreht, angeordnet ist. Bezogen auf die Orientierung gemäß Figur 1 folgt somit auf einen Drahthaken 1, bei dem der lange Schenkel 2 links und der kurze Schenkel 3 rechts angeordnet ist, ein Drahthaken 1 bei dem der lange Schenkel 2 rechts und der kurze Schenkel 3 links angeordnet ist, usw. Die Spitzen 6 des jeweiligen Drahthakens 1 sind entgegengesetzt orientiert. Auch die Orientierung der Spitzen 6 benachbarter Drahthaken 1 ist entgegengesetzt gerichtet, bezogen auf die jeweils unmittelbar benachbarten Schenkel 2 bzw. 3.

Die, bezogen auf die Orientierung nach Figur 1, rechten Schenkel 2 bzw. 3 sind im Übergang zur Kupplungsöse 4 mittels eines Querdrahtes 9 gefasst. Über den Querdraht 9 sind die Drahthaken 1 somit definiert zueinander positioniert. Die gezeigte Hakenanordnung 7 ist in ein plattenförmiges Abdeckelement 10 eingesetzt. Es weist eine rechteckige Hauptfläche 11 auf, wobei der Querdraht 9 der Hakenanordnung 7 parallel zu den Längskanten 12 des Abdeckelementes 10 orientiert ist. Bezogen auf die Mittelachse 8 der Hakenanordnung 7 ist das Abdeckelement 10 symmetrisch positioniert.

Das Abdeckelement 10 ist mit Schlitzen 13 versehen, konkret mit zwölf Schlitzen 13, wobei jeder Schlitz der Aufnahme eines der Drahthaken 1 im Bereich der Kupplungsösen 4 dient. Entsprechend sind die Schlitze 13 parallel zu den Schmalkanten 14 des Abdeckelementes 10 orientiert.

Im Ausführungsbeispiel ist das Abdeckelement 10 als Gewebeband ausgebildet, das, auf seiner dem Querdraht 9 zugewandten Seite 11, mit einer Heißklebeschicht versehen ist. Die Schlitze im Abdeckelement 10 werden beispielsweise durch Ausstanzen mittels eines Formwerkzeuges erzeugt. Die Länge des jeweiligen im Abdeckelement 10 vorgesehenen Schlitzes 13 ist in der Figur 1 mit dem Buchstaben a bezeichnet.

Die Figuren 1 und 2 veranschaulichen die in die Schlitze 13 des Abdeckelementes 10 eingesetzte Hakenanordnung 7. Das Abdeckelement 10 ist hierbei eben und es liegt der Querdraht 9 an diesem an.

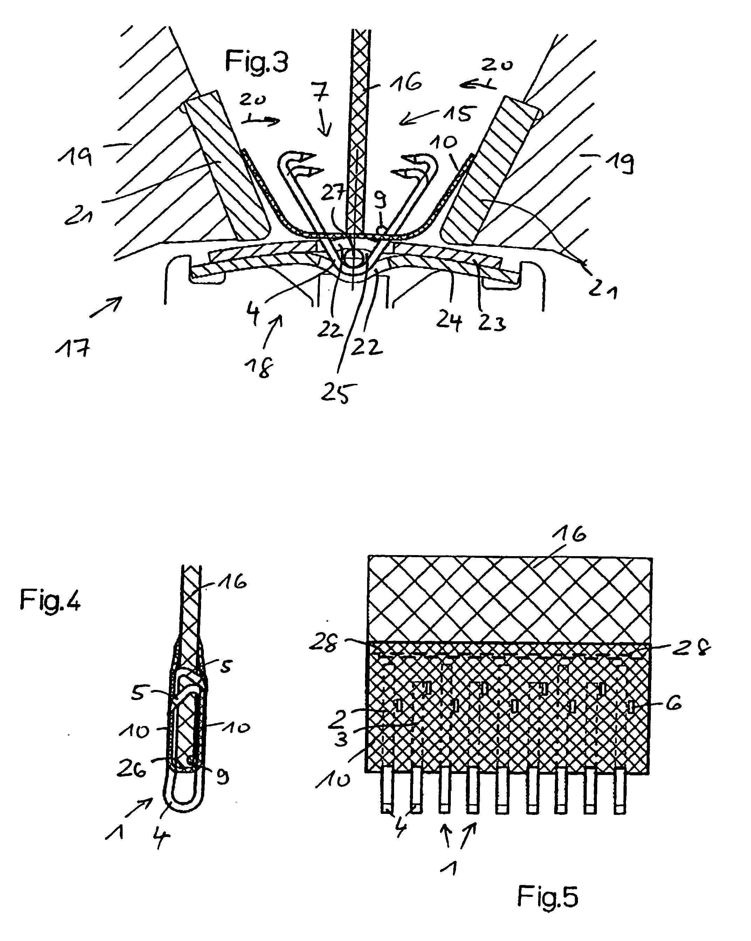

Figur 3 veranschaulicht das Verbinden der Hakenanordnung 7 mit Abdeckelement 10 mit dem Endabschnitt 15 eines Gurtes 16. Bei diesem Gurt handelt es sich um einen solchen, der in seiner Länge elastisch ist, beispielsweise einen Baumwollgurt mit elastischen Fasern. Er weist eine Breite von beispielsweise 5 cm auf, wobei selbstverständlich auch wesentlich größere oder auch geringere Breiten möglich sind. Anwendungsbereich des Gurtes ist insbesondere eine Wäschereimaschine, bei der eine Vielzahl von Gurten nebeneinander angeordnet sind, um Wäschereistücke, beispielsweise frottierte Handtücher, zu transportieren, um sie einer Bügel- und Zusammenlegstation zuzuführen.

Zum Befestigen der Hakenanordnung 7 mit dem Abdeckelement 10 am Gurt 16 ist eine Pressvorrichtung 17 vorgesehen, wie sie in Figur 3 näher veranschaulicht ist.

Die Pressvorrichtung 17 weist eine stationäre Lagervorrichtung 18 zur Aufnahme der Hakenanordnung 7 sowie zwei Pressbacken 19 auf, die über nicht veranschaulichte Stellmittel in Richtung der Pfeile 20 aufeinander zu bzw. in entgegengesetzter Richtung voneinander weg verstellbar sind. Veranschaulicht sind die Pressbacken 19 bei geöffneter Pressvorrichtung 17. In die Pressbacken 19 sind im Kontaktbereich zu dem Abdeckelement 10 und der Hakenanordnung 7 Heizplatten 21 integriert. Die Einrichtung zum Beheizen der Heizplatten ist nicht veranschaulicht. Über die metallischen Heizplatten 21 wird die Pressung der Hakenanordnung 7 bewerkstelligt und damit das Verbinden der Hakenanordnung 7 mit dem Gurt 16 im Bereich dessen Endabschnittes 15 herbeigeführt, bei gleichzeitiger Anbringung des Abdeckelementes 10 an den Schenkeln 2 und 3 der Drahthaken 1, sowie an dem den Spitzen 6 benachbarten Bereich des Gurtes 16.

Der Figur 3 ist zu entnehmen, dass die Drahthaken 1 der Hakenanordnung 7 im Bereich ihrer Kupplungsösen 4 in Schlitze 22 von zwei Lagerplatten 23 und 24 der Lagervorrichtung 18 eingesetzt sind. Ein senkrecht zur Plattenebene in den zwischen den Lagerplatten 23 und 24 gebildeten Spalt 25 eingeschobener Montagestab 27 fixiert die Hakenanordnung 7 in der, in die Lagervorrichtung 18 eingesetzten Position. Das zuvor auf die Hakenanordnung 7 aufgesteckte Abdeckelement 10 ist, aufgrund seiner Flexibilität, zwischen den Heizplatten 21 und den Schenkeln 2 bzw. 3 der Drahthaken 1 hochgebogen. Dieser Zustand ist in Figur 3 veranschaulicht.

Werden die Pressbacken 19 und infolgedessen die beheizten Heizplatten 21 im Sinne einer kreissektorförmigen Bewegung aufeinander zu bewegt, drücken die Heizplatten 21 das Abdeckelement 10 zusammen mit den Schenkeln 2 und 3 der Drahthaken 1 in Richtung des Gurtes 16, wobei die Hakenabschnitte 5 der Drahthaken 1 den Gurt 16 schließlich durchdringen. Das Abdeckelement 10 deckt hierbei die Schenkel 2 und 3 der Drahthaken 1 sowie den angrenzenden Abschnitt des Gurtes 16 ab, wie es in den Figuren 4 und 5 veranschaulicht ist. Aufgrund der Erhitzung des Abdeckelementes 10 verklebt dieses mit dem Gurt 16 im Bereich dessen Stirnfläche 26, den Schenkeln 2 und 3 der Drahthaken 1 und dem angrenzenden Bereich des Gurtes 16. Die Festigkeit der Verbindung des Abdeckelementes 10 im Bereich des Gurtes 16 lässt sich optimieren, wenn dort das Abdeckelement 10 mit dem Gurt 16 mittels einer Quernaht 28 vernäht wird.

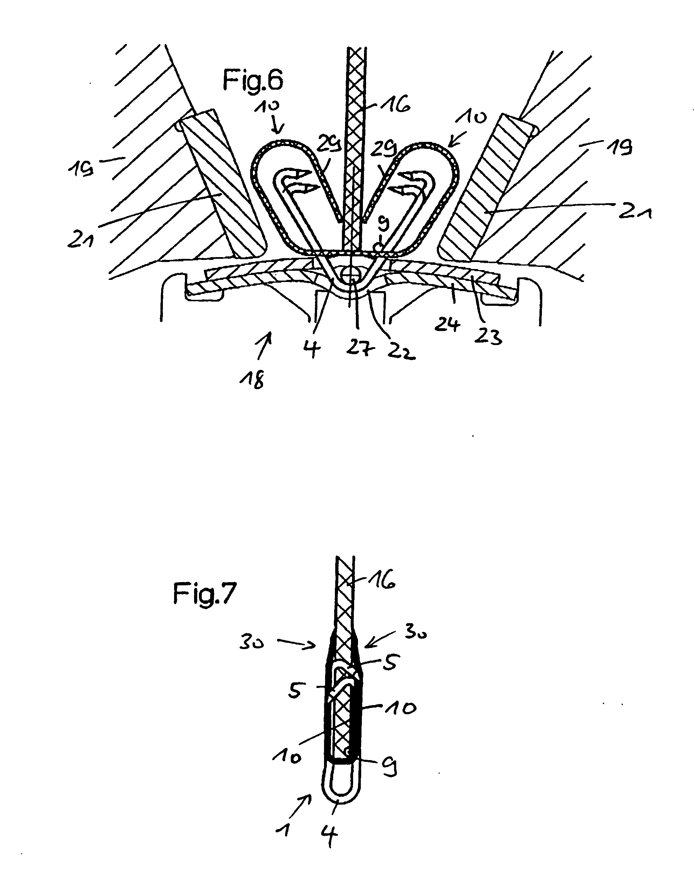

Die Ausführungsform gemäß der Figuren 6 und 7 unterscheidet sich von derjenigen gemäß der Figuren 3 bis 5 nur dadurch, dass ein Abdeckelement 10 verwendet wird, das breiter ist als das in den Figuren 3 bis 5 gezeigte. Dies bedingt, dass das Abdeckelement 10 mit seinen Endabschnitten 29 zwischen den Gurt 16 und die Schenkel 2 bzw. 3 der Drahthaken 1 zurückgebogen werden kann. Beim Betätigen der Pressvorrichtung 17 durchdringen die Spitzen 4 der Drahthaken 1 infolgedessen diese Endabschnitte 29 des Abdeckelementes 10, womit dieses mittels der Drahthaken 1 zusätzlich fixiert ist. Bei dieser Ausführungsform ist der Einschlag des Endabschnittes 29 so gewählt, dass nach der Pressung die beiden gefalteten Bereiche 30 des Abdeckelementes 10 am Gurt 16 anliegen. Bei dieser Anordnung des Abdeckelementes 10 reicht es aus, wenn die Klebschicht nur auf der den Schenkeln 2 und 3 der Drahthaken 1 zugewandten Seite des Abdeckelementes 10 angeordnet ist. Beim Pressen dringt der Klebstoff durch das Gewebe des Abdeckelementes 10, so dass auch der eingeschlagene Endabschnitt 29 des Abdeckelementes 10 eine fest verklebte Einheit mit den Schenkeln 2 bzw. 3 der Drahthaken 1 und dem Gurt 16 bildet. Es ist allerdings auch möglich, an denjenigen Stellen, an denen der eingeschlagene Endabschnitt 29 des Abdeckelementes 10 mit dem Gurt 16 in Verbindung kommt, somit im Bereich der anderen Fläche des Abdeckelementes 10 eine Klebschicht anzubringen. Diese Lösung bietet sich an, wenn das Abdeckelement 10 nicht geeignet ist, den Klebstoff hindurchtreten zu lassen.

Bei den beiden gezeigten Ausführungsbeispielen sind die Längen der Hakenabschnitte 5 der Drahthaken 1 so bezüglich der Stärke des Gurtes 16 bemessen, dass die Spitzen 6 der Hakenabschnitte 5, bei mit dem Gurt 16 verbundenen Drahthaken 1, in das Abdeckelement 1 eingreifen, allerdings ohne über dieses hervorzustehen.

## Patentansprüche

1. Verbindung von als Drahthaken (1) ausgebildeten Gurtverbindern mit einem Ende (15) eines Gurtes (16), wobei der jeweilige Drahthaken (1) beidseitig des Gurtes (16) angeordnete Schenkel (2, 3) und sich an diese anschließende, in den Gurt (16) eingepresste Hakenenden (5), sowie eine die beiden Schenkel (2, 3) verbindende Kupplungsöse (4) aufweist, sowie mit einem flächigen Abdeckelement (10) für die Hakenanordnung (7), wobei das Abdeckelement (10) sich über die Breite des Gurtes (16) erstreckt, **dadurch gekennzeichnet, dass** das Abdeckelement (10), ausgehend von der Stirnseite (26) des Gurtes (16), beidseitig des Gurtes (16) angeordnet ist und die Schenkel (2, 3) der Drahthaken (1) abdeckt.

2. Verbindung nach Anspruch 1, **dadurch gekennzeichnet, dass** die Drahthaken (1) mittels eines Querdrahtes (9) verbunden sind.

3. Verbindung nach Anspruch 1 oder 2, **dadurch gekennzeichnet, dass** der Gurt (16) in seiner Länge elastisch ist.

4. Verbindung nach einem der Ansprüche 1 bis 3, **dadurch gekennzeichnet, dass** der Gurt (16) als Baumwollgurt, insbesondere Baumwollgurt mit elastischen Fasern, oder als Kunststoffgurt, insbesondere Polyurethangurt ausgebildet ist.

5. Verbindung nach einem der Ansprüche 1 bis 4, **dadurch gekennzeichnet, dass** das Abdeckelement (10) als Gewebeband oder Kunststoff-Formteil ausgebildet ist.

6. Verbindung nach einem der Ansprüche 1 bis 5, **dadurch gekennzeichnet, dass** das Abdeckelement (10) mit einer Klebeschicht, insbesondere einer Heißklebeschicht, oder einem elastischen Kleber versehen ist.

7. Verbindung nach einem der Ansprüche 1 bis 6, **dadurch gekennzeichnet, dass** Enden (6) der Drahthaken (1) in das Abdeckelement (10) eingreifen.

8. Verbindung nach einem der Ansprüche 1 bis 7, **dadurch gekennzeichnet, dass** das Abdeckelement (10) mit parallelen Schlitzen (13) versehen ist, die die Hakenanordnung (7) im Bereich der Kupplungsösen (4) durchsetzt.

9. Verbindung nach einem der Ansprüche 2 bis 8, **dadurch gekennzeichnet, dass** das Abdeckelement (10) den Querdraht (9) auf seine den Kupplungsösen (4) zugewandten Seite kontaktiert.

10. Verbindung nach einem der Ansprüche 1 bis 9, **dadurch gekennzeichnet, dass** das Abdeckelement (10) im Bereich der Hakenenden (5) zwischen die Schenkel (2, 3) und den Gurt (16) zurückgebogen ist.

11. Verfahren zum Herstellen einer Verbindung nach einem der Ansprüche 1 bis 10, **dadurch gekennzeichnet, dass** die Befestigung der Drahthaken (1) am Gurt (16) und das Anbringen des Abdeckelementes (10) in einem Arbeitsgang folgt.

12. Verfahren nach Anspruch 11, **dadurch gekennzeichnet, dass** das Anbringen des Abdeckelementes (10) beim Einpressen der Drahthaken (1) in den Gurt (16) erfolgt.

13. Verfahren nach Anspruch 12, **dadurch gekennzeichnet, dass** das Abdeckelement (10) mit Schlitzen (13) versehen ist, durch die die Kupplungsösen (4), vor dem Befestigen der Drahthaken (1) am Gurt (16), hindurch gesteckt werden.

14. Verfahren nach Anspruch 12 oder 13, **dadurch gekennzeichnet, dass** das Befestigen der Drahthaken (1) am Gurt (16) und das Anbringen des Abdeckelements (10) in einer Presse (17) erfolgt, wobei aufeinander zu bewegbare Pressbacken (19) die in geöffneter Position befindlichen Haken (1) und das zwischen diesen eingelegte Gurtende (15), sowie Endabschnitte des Abdeckelementes (10), die zwischen den Schenkeln (2, 3) der Haken (1) und den Backen (19) angeordnet sind, zwischen sich aufnehmen.

15. Verfahren nach einem der Ansprüche 12 bis 14, **dadurch gekennzeichnet, dass** das Abdeckelement (10) beim Anbringen mit den Schenkeln (2, 3) der Haken (1) verklebt wird, insbesondere unter Hitzeeinwirkung verklebt wird.

16. Verfahren nach Anspruch 15, **dadurch gekennzeichnet, dass** das Abdeckelement (10) beim Anbringen mit der Stirnfläche (26) des Gurtendes (16) und/oder den, den Kupplungsösen (4) abgewandten Bereichen des Gurtes (16) verklebt wird, insbesondere unter Hitzeeinwirkung verklebt wird.

17. Verfahren nach einem der Ansprüche 12 bis 16, **dadurch gekennzeichnet, dass** das Abdeckelement (10) im Bereich seiner, den Kupplungsösen (4) abgewandten Enden, zwischen den Gurt (16) und die Schenkel (2, 3) der Haken (1) eingelegt wird.

18. Verfahren nach einem der Ansprüche 12 bis 17, **dadurch gekennzeichnet, dass** das Abdeckelement (10) im Bereich seiner, den Kupplungsösen (4) abgewandten Enden, mit dem Gurt (16) vernäht wird.

## Claims

1. Fastening of belt connectors taking the form of wire hooks (1) to one end (15) of a belt (16), each wire hook (1) having sides (2, 3) disposed on either side of the belt (16), and hooked ends (5) adjoining said sides (2, 3) and being pressed into the belt (16), as well as a coupling eyelet (4) linking the two sides (2, 3), and a flat covering element (10) for the hook arrangement (7), the covering element (10) extending across the width of the belt (16), **characterized in that**, proceeding from the front end (26) of the belt (16), the covering element (10) is disposed on either side of the belt (16) and covers the sides (2, 3) of the wire hooks (1).

2. Fastening according to Claim 1, **characterized in that** the wire hooks (1) are connected by means of a transverse wire (9).

3. Fastening according to Claim 1 or 2, **characterized in that** the belt (16) is elastic in its length.

4. Fastening according to one of Claims 1 to 3, **characterized in that** the belt (16) takes the form of a cotton belt, in particular a cotton belt with elastic fibres, or a synthetic belt, in particular a polyurethane belt.

5. Fastening according to one of Claims 1 to 4, **characterized in that** the covering element (10) is formed as a strip of fabric or a plastic shaped part.

6. Fastening according to one of Claims 1 to 5, **characterized in that** the covering element (10) is provided with a layer of adhesive, in particular a layer of heat-set adhesive, or a flexible adhesive.

7. Fastening according to one of Claims 1 to 6, **characterized in that** ends (6) of the wire hooks (1) engage in the covering element (10).

8. Fastening according to one of Claims 1 to 7, **characterized in that** the covering element (10) is provided with parallel slots (13), which the hook arrangement (7) passes through in the region of the coupling eyelets (4).

9. Fastening according to one of Claims 2 to 8, **characterized in that** the covering element (10) contacts the transverse wire (9) on its side facing the coupling eyelets (4).

10. Fastening according to one of Claims 1 to 9, **characterized in that,** in the region of the hooked ends (5), the covering element (10) is bent back between the sides (2, 3) and the belt (16).

11. Method of manufacturing a fastening according to one of Claims 1 to 10, **characterized in that** fixing of the wire hooks (1) to the belt (16) and attaching of the covering element (10) takes place in a single operation.

12. Method according to Claim 11, **characterized in that** the covering element (10) is attached upon pressing of the wire hooks (1) into the belt (16).

13. Method according to Claim 12, **characterized in that** the covering element (10) is provided with slots (13), through which the coupling eyelets (4) are pushed prior to fixing of the wire hooks (1) to the belt (16).

14. Method according to Claim 12 or 13, **characterized in that** fixing of the wire hooks (1) to the belt (16) and attachment of the covering element (10) is carried out in a press (17), in which case pressing jaws (19), which can be moved relative to one another, hold between them the hooks (1) in their open position and the end (15) of the belt placed between said hooks (1) as well as end portions of the covering element (10) which are disposed between the sides (2, 3) of the hooks (1) and the jaws (19).

15. Method according to one of Claims 12 to 14, **characterized in that**, during the attachment process, the covering element (10) is glued together with the sides (2, 3) of the hooks (1), and in particular is glued together under the influence of heat.

16. Method according to Claim 15, **characterized in that**, during the attachment process, the covering element (10) is glued together with the end face (26) of the end of the belt (16) and/or with the parts of the belt (16) facing away from the coupling eyelets (4), and in particular is glued under the influence of heat.

17. Method according to one of Claims 12 to 16, **characterized in that**, in the region of its ends facing away from the coupling eyelets (4), the covering element (10) is inserted between the belt (16) and the sides (2, 3) of the hooks (1).

18. Method according to one of Claims 12 to 17, **characterized in that**, in the region of its ends facing away from the coupling eyelets (4), the covering element (10) is sewn together with the belt (16).

## Revendications

1. Liaison de liens de courroie sous forme d'agrafe (1) à une extrémité (15) d'une courroie (16), chacune des agrafes (1) présentant des branches (2, 3) placées de chaque côté de la courroie (16) et suivies d'extrémités d'agrafe (5) enfoncées dans la courroie (16) ainsi qu'un oeillet de couplage (4) qui relie les deux branches (2, 3), et avec un élément de recouvrement (10) plat pour le système d'agrafes (7), l'élément de recouvrement (10) s'étendant sur la largeur de la courroie (16),
**caractérisée en ce que**
l'élément de recouvrement (10) est disposé de chaque côté de la courroie (16) en partant du côté frontal (26) de la courroie (16) et recouvre les branches (2, 3) des agrafes (1).

2. Liaison selon la revendication 1,
**caractérisée en ce que**
les agrafes (1) sont reliées à l'aide d'un fil métallique transversal (9).

3. Liaison selon la revendication 1 ou 2,
**caractérisée en ce que**
la courroie (16) est élastique en longueur.

4. Liaison selon l'une des revendications 1 à 3,
**caractérisée en ce que**
la courroie (16) est une courroie en coton, en particulier une courroie en coton comportant des fibres élastiques, ou une courroie en matière synthétique, en particulier une courroie en polyuréthane.

5. Liaison selon l'une des revendications 1 à 4,
**caractérisée en ce que**
l'élément de recouvrement (10) est une bande en tissu ou une pièce moulée en matière synthétique.

6. Liaison selon l'une des revendications 1 à 5,
**caractérisée en ce que**
l'élément de recouvrement (10) est muni d'une couche adhésive, en particulier d'une couche thermocollante, ou d'une colle élastique.

7. Liaison selon l'une des revendications 1 à 6,
**caractérisée en ce que**
les extrémités (6) des agrafes (1) pénètrent dans l'élément de recouvrement (10).

8. Liaison selon l'une des revendications 1 à 7,
**caractérisée en ce que**
l'élément de recouvrement (10) est muni de fentes (13) parallèles qui traversent le système d'agrafes (7) dans la zone des oeillets de couplage (4).

9. Liaison selon l'une des revendications 2 à 8,
**caractérisée en ce que**
l'élément de recouvrement (10) est en contact avec le fil métallique transversal (9) sur son côté tourné vers les oeillets de couplage (4).

10. Liaison selon l'une des revendications 1 à 9,
**caractérisée en ce que**
dans la zone des extrémités d'agrafe (5) l'élément de recouvrement (10) est courbé en arrière entre les branches (2, 3) et la courroie (16).

11. Procédé pour fabriquer une liaison selon l'une des revendications 1 à 10,
**caractérisé en ce que**
les agrafes (10) sont fixées à la courroie (16) et l'élément de recouvrement (10) est appliqué en une seule opération.

12. Procédé selon la revendication 11,
**caractérisé en ce que**
l'élément de recouvrement (10) est appliqué en enfonçant les agrafes (1) dans la courroie (16).

13. Procédé selon la revendication 12,
**caractérisé en ce que**
l'élément de recouvrement (10) est muni de fentes (13) à travers lesquelles les oeillets de couplage (4) sont engagés avant de fixer les agrafes (1) à la courroie (16).

14. Procédé selon la revendication 12 ou 13,
**caractérisé en ce que**
la fixation des agrafes (10) à la courroie (16) et l'application de l'élément de recouvrement (10) ont lieu dans une presse (17), des mâchoires (19) qu'on peut rapprocher accueillent entre elles les agrafes (1) ouvertes et l'extrémité de courroie (15) insérée entre elles, ainsi que les segments terminaux de l'élément de recouvrement (10) placés entre les branches (2, 3) des agrafes (1) et les mâchoires (19).

15. Procédé selon l'une des revendications 12 à 14,
**caractérisé en ce que**
lors de l'application l'élément de recouvrement (10) est collé aux branches (2, 3) des agrafes (1), en particulier est collé sous l'action de la chaleur.

16. Procédé selon la revendication 15,
**caractérisé en ce que**
lors de l'application l'élément de recouvrement (10) est collé à la surface frontale (26) de l'extrémité de courroie (16) et/ou aux zones - de la courroie (16) - détournées des oeillets de couplage (4), en particulier est collé sous l'action de la chaleur.

17. Procédé selon l'une des revendications 12 à 16,
**caractérisé en ce que**
dans la zone de ses extrémités détournées des oeillets de couplage (4), l'élément de recouvrement (10) est inséré entre la courroie (16) et les branches (2, 3) des agrafes (1).

18. Procédé selon l'une des revendications 12 à 17,
**caractérisé en ce que**
dans la zone de ses extrémités détournées des oeillets de couplage (4), l'élément de recouvrement (10) est cousu à la courroie (16).
